# EUROPEAN PATENT APPLICATION

(11) **EP 0 692 297 A2**
(43) Date of publication of application: **17.01.1996**
(21) Application number: 95111089.9
(22) Date of filing: 14.07.1995
(51) Int. Cl.: B01D 53/22

(54) **Gas prepurification**

(30) Priority: 15.07.1994 US 272992
(71) Applicant: PRAXAIR TECHNOLOGY, INC., Danbury, CT 06810-5113 (US)
(72) Inventor: Prasad, Ravi, East Amherst (14051) New York (US)
(74) Representative: Schwan, Gerhard, Dipl.-Ing.

(57) **Abstract**

A carbon trap is employed to remove hydrocarbons, including heavy hydrocarbons, and/or organic or inorganic vapors from an air or other gas stream passing to a membrane or other gas separation system. By employing a membrane dryer upstream of the carbon trap, the operating life of the carbon trap can be extended and the overall performance of the gas separation system can be enhanced.

## Description

### Background of the Invention

Field of the Invention - The invention relates to the prepurification of feed gas streams passing to gas separation operations. More particularly, it relates to enhancing the adsorption capacity of adsorption beds employed upstream of membrane gas separation operations.

Description of the Prior Art - In the separation of air to produce oxygen, nitrogen and argon, and in various other gas separation processes, it is necessary to remove certain impurities from the feed gas prior to bulk separation processing. In cryogenic air separation, it is essential to remove water vapor and carbon dioxide from air before deep refrigeration. These impurities must usually be removed prior to pressure swing adsorption (PSA) processing as well. Membrane separation processes are less sensitive to these impurities, but are subject to degradation by trace quantities of heavy hydrocarbons and/or organic or inorganic vapor contaminants. Nearly all commercial gas separation processes require compression of the feed stream with oil-lubricated compressors. Such compressors unavoidably introduce small quantities of oil into the gas stream, and such hydrocarbons must be removed before entering the bulk separation process.

All practical air separation processes, therefore, must employ some means of prepurification to remove traces of undesired hydrocarbons and/or organic or inorganic vapors from a feed air stream. It is also frequently necessary or desirable to remove most of the water vapor and carbon dioxide in the prepurification operation.

Permeable membrane processes and systems are known in the art and have been employed or considered for a wide variety of gas and liquid separations. In such operations, a feed stream is brought into contact with the surface of a membrane, and the more readily permeable component of the feed stream is recovered as a permeate stream, with the less readily permeable component being withdrawn from the membrane system as a non-permeate stream.

The inherent simplicity of such fluid separation operations constitutes an incentive in the art to expand the use of membrane systems in practical commercial operations. In this regard, it will be appreciated that the selectivity and permeability characteristics of such membrane systems must be compatible with the overall production requirements of a given application. It is also necessary, of course, that the membranes exhibit acceptable stability and do not suffer undue degradation of their performance properties in the course of practical commercial operations.

Air separation applications constitute a highly desirable field of use for permeable membranes. In such applications, oxygen is typically the more readily permeable component of the feed air for particular membranes, and is withdrawn as the permeate gas. In such embodiments, nitrogen is the less readily permeable component, and is recovered as non-permeate gas. In air separation applications, it has been found that the performance characteristics of the membranes are sensitive to the presence of certain contaminants in the feed air stream. Exposure to such contaminants may result in a significant reduction in the permeability of the membrane in use. Fortunately, most contaminants commonly present in ambient air, such as light hydrocarbons, have been found to result in, at most, a modest decrease in membrane permeability. The presence of even relatively low concentrations, e.g., less than 1 ppm by volume as C₁, of heavy hydrocarbon oil vapors, such as might enter the feed air stream from an oil lubricated air compressor, or of other organic vapors, such as methylene chloride, carbon tetrachloride or other such solvent materials, or of inorganic vapors, such as carbon dioxide, in some instances, can result in rapid and extensive loss of membrane permeability.

Among the major cost components of membrane systems for air or other gas separations are the membrane modules having a given membrane surface area, and the air or other gas compressor unit to achieve a suitable permeation pressure level, so that the desired product gas quality and production can be achieved. The surface area requirements of the membrane system can generally be minimized for a given set of operating conditions, i.e., pressure, temperature and flow rate, by selecting a membrane material having a very high permeability for the more readily permeable component of the gas mixture being separated. Typically, for a given selectivity, the higher the membrane permeability, the less membrane area will be required for a given set of production requirements. Compressor costs are typically minimized, particularly in small plants, by the selection of oil lubricated rotary screw feed compressors.

During development work on membrane systems for air separation applications, it was found that the membrane permeability was subject to an initially rapid and significant decrease, followed by a further gradual decline over a period of months of operations. In response to such undesirable decrease in membrane permeability, it is presently common membrane practice to size the active membrane surface area with safety factor sufficiently large to compensate for the anticipated permeability loss from all sources. Initially, therefore, the membrane system is significantly oversized for the desired product flow, and the feed gas compressor is typically operated in a turndown mode. As permeability degradation proceeds, either the operating temperature or pressure, or both, are increased to compensate for the decrease in permeability. In some instances, it is necessary or desirable to by-pass some of the modules in the membrane system initially, so as to reduce excess membrane area employed when the membrane exhibit their full permeability capability, and subsequently to bring such by-passed modules on stream as degradation of the initially employed modules progresses. In such instances, it will be appreciated that, in addition to a significant capital cost penalty associated with the provision of extra membrane surface area, such a membrane system must operate over a significant portion of its operating life under off-design conditions, and that the control strategy for such a membrane system is more complex than for a system operating closer to its optimum design conditions.

As an alternative to such overdesign of membrane systems to compensate for degradation in use, attempts have been made to restore lost performance, but such efforts were initially unsuccessful in developing an economically feasible means for restoring the permeability of degraded membranes. While practical and economical means for restoring the permeability characteristics of degraded membranes may presently be available, obviating the need to discard degraded modules for replacement by new modules after an unduly short period of operation, further improvement in the response to the problem of membrane degradation is highly desirable in the membrane art. Neither overdesign of the membrane system, nor the membrane by-pass approach, nor interruption of gas product operation for membrane permeability restoration treatment, or a combination of these approaches is an entirely satisfactory means for overcoming permeability degradation in practical commercial air or other gas separation operations.

In another approach known in the art, adsorption beds have been employed to remove oil and hydrocarbons from feed air. While various adsorbents can be employed for this purpose, "activated carbon" is generally preferred for use in adsorption beds, or carbon traps, positioned upstream of an air or other gas separation membrane system. While the capacity of such a carbon trap can be designed to remove essentially all of the lighter and heavier hydrocarbons present as contaminants in a feed gas mixture, Prasad and Haas, in U.S. 4,881,953, disclosed the use of activated carbon or other adsorption beds to selectively remove the heavier hydrocarbons found to be responsible for degradation of membrane permeability, without removal of lighter hydrocarbons of C₅ or less, or water vapor or carbon dioxide, from the feed air or other feed gas stream. By such selective adsorption of heavy hydrocarbons, the adsorption bed enables membrane systems to be employed without significant overdesign of separation capacity and with extended periods of effective life before replacement or restoration. Thus, the adsorption bed can be optimized for a given gas separation operation as a result of such selective removal of heavier hydrocarbons, and can be made disposable upon being loaded with heavier hydrocarbons.

In spite of the successful use of activated carbon traps and other adsorption beds to remove heavy hydrocarbons from compressed air and other gas streams, it had been found that the adsorptive capacity of carbon beds for such hydrocarbons is considerably reduced by the presence of large amounts of water or water vapor. When air is compressed, the resultant high-pressure stream is often saturated with water vapor. Even after chilling and removing liquid water from the air or other gas stream, the concentration of water vapor in the stream is high enough to degrade the capacity of the carbon traps for all hydrocarbons, including heavy hydrocarbons, and/or organic or inorganic vapors. The detrimental effect of water vapor on the capacity of activated carbon to adsorb oil has been recognized in the art. R. Jain, in "Process for preventing Degradation of Gas Separation Membranes Due to Oil Vapors", North American Membrane Society, Lexington, Kentucky, May 17-20, 1992, proposed using a bed composed of three layers, namely activated alumina, activated carbon and activated alumina. The feed gas is passed through the bed, with water being removed by the alumina and the contaminant oil being removed by the carbon. When the first alumina layer becomes saturated with water, the direction of flow is reversed so that the other alumina layer becomes first in the flow stream. After passing through the intermediate carbon layer, the feed gas passes into the previously saturated alumina layer, where water is desorbed from the alumina and said alumina layer is partially regenerated. While this procedure enhances the oil adsorption capacity of the carbon, it leaves the water vapor in the stream passing to a downstream processing operation. The procedure is also intermittent in nature. Upon switching flow directions through the composite bed, the loaded, or dirty, end of the intermediate carbon bed is shifted from the inlet to the exit side of the flow stream, which can allow some oil contamination to reenter the feed gas stream.

Despite the desirable use of carbon traps and the above-identified proposal for the use of an adsorption bed having the three indicated layers, further improvement in the pre-purifying of the feed gas passing to a membrane or other gas separation system is desired in the art.

It is an object of the invention, therefore, to provide an improved process and system for the prepurification of a feed gas stream passing to an air separation system.

It is another object of the invention to provide an improved process and system for enhancing the hydrocarbon adsorptive capacity of an adsorbent bed used to prepurify a feed gas stream passing to a membrane or other gas separation system.

It is a further object of the invention to provide an improved process and system for overcoming the problem of permeability degradation during membrane gas separation operations.

With these and other objects in mind, the invention is hereinafter described in detail, the novel feature thereof being particularly pointed out in the appended claims.

### Summary of the Invention

A membrane dryer is employed upstream of an adsorption bed used to remove hydrocarbons and/or organic or inorganic vapors from a feed gas stream passing to a gas separation or other processing operation. The, membrane dryer reduces the water vapor content of the feed gas stream to a suitable level having a minimal effect on the hydrocarbon and/or organic or inorganic vapor capacity of the adsorption bed.

### Brief Description of the Drawings

The invention is hereinafter described in detail with reference to the accompanying drawings in which:
Fig. 1 is a schematic flow diagram of an embodiment of the invention in which a prepurification membrane dryer is employed upstream of an adsorption bed used to purify a gas stream passing to a downstream processing operation;
Fig. 2 is a schematic flow diagram of a particular embodiment of the invention in which the downstream processing operation is a gas separation membrane system;
Fig. 3 is a diagram illustrating the relationships between the humidities of process gas streams and the purge ratio employed in the prepurifier membrane dryer system employed in the practice of the invention; and
Fig. 4 is a schematic flow diagram of an embodiment of the invention employing a two stage membrane gas separation system integrated with the prepurification membrane dryer and the adsorption bed used to purify the gas stream to said membrane system.

### Detailed Description of the Invention

The objects of the invention are accomplished by employing, in series, a membrane dryer followed by an adsorption bed, such as a carbon trap, as a prepurification system upstream of a gas separation or treatment processing unit. The reduced capacity of the carbon trap or other adsorption bed for hydrocarbons and/or organic or inorganic vapors due to the presence of water vapor is advantageously overcome by thus pre-drying the feed gas stream in a membrane dryer prior to its contact with the adsorption bed. Upon passage through the membrane dryer, the air or other feed gas stream will have a reduced water vapor content, with the residual water vapor level having a negligible or minimal effect on the hydrocarbon and/or organic or inorganic vapor adsorptive capacity of the carbon trap or other adsorption bed.

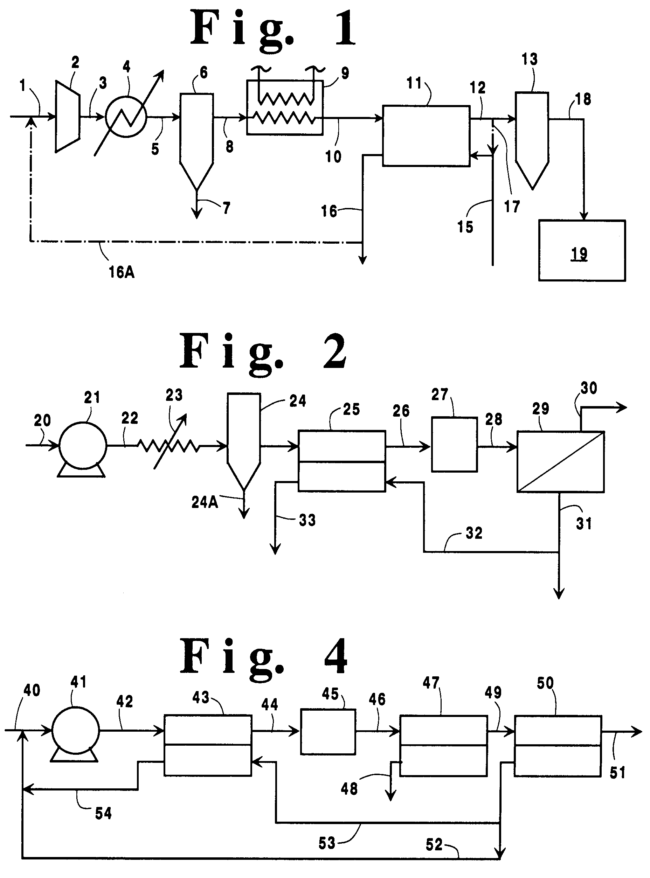

As illustrated in Fig. 1 with respect to an air separation embodiment of the invention, feed air in line 1 is compressed in a typically oil-lubricated compressor 2, from which compressed feed air passes in line 3 to after cooler 4, and therefrom as a saturated air stream in line 5 to moisture separator 6, from the bottom of which water is removed through line 7. To eliminate further condensation the feed air stream can be passed in line 8 to heat exchanger or heater 9 prior to passage in line 10 to membrane dryer 11. The membrane dryer removes the bulk of the residual water vapor present in the feed air stream and lowers the vapor pressure thereof to a level that does not substantially effect the capacity of the downstream carbon trap. The more permeable components of the feed air stream, principally water vapor, permeate through the permeable membrane material in said membrane dryer 11 and are discharged to waste through line 16. As shown in the drawing, a portion of the waste stream in line 16 may be recycled through line 16A to line 1 for passage, with additional quantities of feed air, to air compressor 2. A suitable source of relatively dry gas can be passed through line 15 to the product discharge end of membrane dryer 11 for passage on the permeate side thereof, preferably countercurrent to the passage of feed air on the feed or non-permeate side of said membrane dryer 11. Such passage of purge gas facilitates the removal of fast permeating gas, i.e., water vapor (moisture), from the membrane surface, thereby facilitating the overall feed gas drying operation.

The dry feed air discharged from membrane dryer 11 passes through line 12 to carbon trap 13, where the heavy hydrocarbon and/or organic or inorganic vapor contaminants present in the feed air are removed. As shown in the drawing, a portion of said dry feed air stream can be withdrawn through line 17 for recycle to membrane dryer 11, on the permeate side thereof as purge gas. Upon adsorption of selectivity adsorbable contaminants, i.e., said hydrocarbons, including heavy hydrocarbons, and/or organic or inorganic vapors therefrom, the thus-purified feed air stream passes in line 18 to a downstream processing system 19, where further purification, separation or other desired processing is carried out. Typically, such processing generates a dry gas stream that is discharged therefrom as a waste gas stream. This stream is preferably recycled, as in said line 15, for use as a low-pressure purge gas on the permeate side of membrane dryer 11.

In the operation of the embodiment illustrated in Fig. 1, ambient air is passed in line 1 to a single or multiple-stage compressor 2 where the air is compressed to a desired high pressure level. As indicated above, the compressor is typically lubricated with oil, and traces of oil are entrained into the high-pressure air stream. This stream is passed to aftercooler 4, as illustrated, or cooling may be provided between the stages of multistage compressors. Upon cooling, the stream in line 5 is usually saturated, and liquid water is separated therefrom in moisture separator 6. The feed air passing therefrom is still saturated, and may optimally, be heated in heat exchanger or heater 9. The saturated or sub-saturated air stream passes in line 10 to the high pressure feed side of membrane drier, i.e., drying module, 11. As the feed air flows through this module, the water vapor pressure thereof is reduced to a desirably low level. The dried retentate, or non-permeate, feed air passes therefrom through line 12 to carbon trap 13, wherein the hydrocarbons, including heavy hydrocarbons, and/or organic or inorganic vapors, entrained therein are adsorbed and removed therefrom. The resulting dry, purified stream is an advantageous feed stream for the downstream processing system 19.

When the downstream processing system is a membrane air separation system for producing high purity nitrogen product by the selective permeation of oxygen, and the recovery of said nitrogen product as permeate gas, removal of hydrocarbons, including heavy hydrocarbons, and/or organic or inorganic vapor contaminants is particularly important. Although the membrane materials used for air separation membranes have been found, surprisingly as disclosed in the Prasad and Hass patent, U.S. 4,881,953, not to be adversely affected by the presence of substantial concentrations of light hydrocarbons, the membrane materials are, however, degraded with respect to the permeability characteristics thereof upon exposure to heavy hydrocarbon and/or organic or inorganic vapor contaminants during use in continuous air separation operations.

In the membrane process for high-purity nitrogen production, oxygen-enriched air is also produced as a waste gas. All or a portion of this waste gas can be passed through line 15 to the low pressure permeate side of membrane dryer 11 for purge purposes, desirably by passage on the permeate side in a direction countercurrent to the direction of flow of the high pressure feed air stream to said membrane dryer 11. Such purge gas, together with the water vapor selectively permeating from feed air in said membrane dryer 11, is withdrawn in line 16 and may be discharged as waste.

If the downstream processing system 19 is a cryogenic distillation process or a pressure swing adsorption process, waste streams are likewise produced that can be passed through line 15 to serve as purge gas for membrane dryer 11. Suitable waste streams from other processes can also be used for purge purposes.

The invention thus enhances the hydrocarbon and/or organic vapor adsorption capacity of the carbon trap by the use of a membrane dryer to efficiently reduce the water vapor from the feed gas to levels that have a negligible or minimal effect on the capacity of said carbon trap to adsorb hydrocarbons, particularly heavy hydrocarbons, and/or organic or inorganic vapors from the feed gas. While the individual components of the invention have been employed for their particular purposes, the unique combination of components, and their use for the purposes of the invention, provide a significant benefit in the gas separation art. The location of the carbon trap in the air or other feed gas stream preceding the downstream processing system prevents hydrocarbon and/or organic or inorganic vapor contamination from entering said downstream process. The membrane dryer prevent excessive quantities of water vapor from entering the carbon trap and degrading its performance. It will be understood that the membrane materials used in the membrane dryer generally differ from those used in downstream air or other gas separation systems, and are less susceptible to hydrocarbon and/or. organic vapor degradation. Thus, the compositions used in the membrane dryer will generally have a high selectivity for water over the gas being dried, i.e., nitrogen and oxygen in air drying. As indicated in the Prasad patent US 5,226,932, the water/air separation factor should be at least 50, preferably greater than 1,000, for advantageous moisture removal from feed air, with low permeability for the gas being dried. Cellulose acetate, ethyl cellulose, sulfonated polysulfone, polyamide and polystyrene are examples of membrane materials suitable for use in drying applications. As used herein, the membrane dryer reduces the water vapor concentration sufficiently so that it has no serious effect on the adsorptive capacity of the carbon trap to adsorb heavy hydrocarbons and/or organic or inorganic vapors. It should be noted that the compressed air is generally saturated at the temperature of the aftercooler. Additional refrigeration could be employed to reduce the water vapor concentration, but this approach is less efficient than the use of a membrane dryer in accordance with the subject invention.

The use of a membrane dryer and carbon trap to prepurify feed air to a membrane system for producing low to medium purity nitrogen, typically about 90% to 98% nitrogen is illustrated in Fig. 2 of the drawings, wherein a single stage air separation membrane capable of countercurrent operation with complete radial mixing is employed. Thus, feed air passes in line 20 to air compressor 21, and therefrom in line 22 to aftercooler 23 through moisture separator 24, from which liquid water is removed through line 24A, to membrane dryer 25. The compressed, dried feed air passes therefrom in line 26 to carbon trap 27 for heavy hydrocarbon and/or organic or inorganic vapor removal. The thus-purified feed air passes in line 28 to membrane unit 29 from which nitrogen product gas is recovered through line 30. Dry oxygen-enriched permeate gas is withdrawn from membrane unit 29 through line 31, with a portion thereof being diverted through line 32 for use as purge gas in said membrane dryer 25. The permeate gas in membrane dryer 25, i.e. fast permeating moisture, and said purge gas are removed from the dryer through line 33 for discharge from the process.

In an illustrative example of the Fig. 2 embodiment, the air separation membrane employed has an oxygen/nitrogen separation factor of 6. The feed air passing to the membrane dryer is at a pressure of 175 psig and 100°F, and the permeate and purge gas are discharged from the membrane dryer at 15 psia, i.e., essentially one atmosphere. The membrane dryer, operating in a countercurrent flow mode with low pressure purge, has a separation factor of water/oxygen greater than 1,000, and a permeability/thickness ratio for water of 1.9 x 10⁷ Barrers/cm. The membrane air separation unit is operated at a stage cut of about 57%, thereby determining the maximum purge ratio available to the membrane dryer.

In this example, the degree of dryness achieved by the membrane dryer depends on the amount and dryness of the purge stream, which is, as noted above, a portion of the permeate from the air separation membrane unit. The water content of the permeate depends on the water vapor in the high-pressure feed air passing to the membrane air separation unit. The humidities of the process streams are therefore, coupled and interdependent.

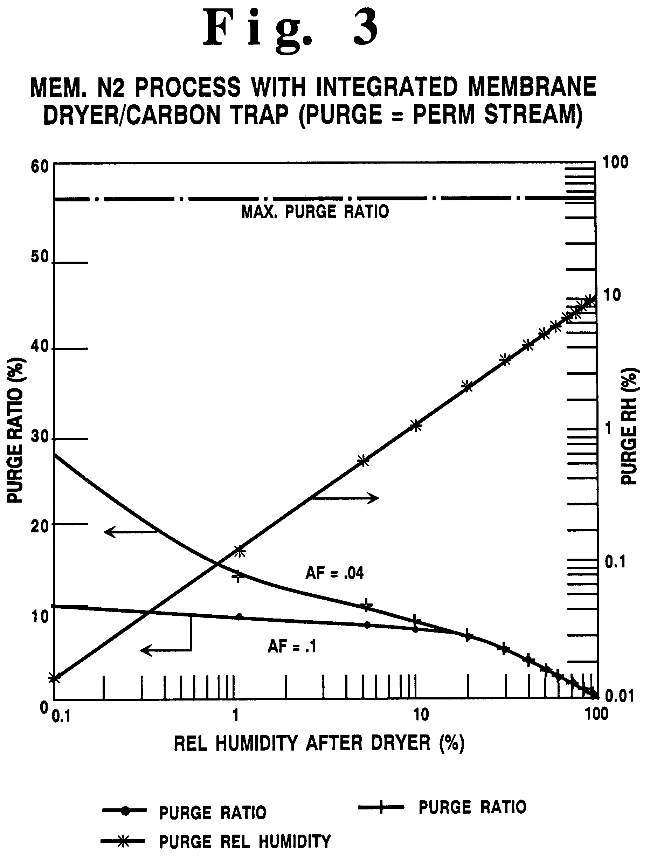

The relationship among the humidities of the process streams and the purge ratio are shown in the Table below and illustrated in Fig. 3, of the drawings. When the purge ratio is low, it is found that the humidity of the product from the membrane dryer is high, as is the humidity of the purge stream. As the purge ratio is increased, however, the humidities of both streams decrease.

At low humidity levels, the purge ratio will be seen to depend on the area factor (AF)of the membrane dryer, and two values thereof have been employed in the example. The area factor is the membrane surface area required for a unit of dry product flow.

**TABLE**

| Dryer Prod. R.H. % | Dryer Prod. ppm H₂O | Purge ppm H₂O | Purge R.H. % | Purge Ratio % | |
|---|---|---|---|---|---|
| | | | | A.F=0.1 | A.F.=0.04 |
| 90 | 4559 | 8012 | 12.5 | 0.9 | 0.9 |
| 80 | 4053 | 7123 | 11.1 | 1.8 | 1.8 |
| 70 | 3546 | 6232 | 9.7 | 2.6 | 2.6 |
| 60 | 3040 | 5343 | 8.3 | 3.4 | 3.4 |
| 50 | 2533 | 4452 | 6.9 | 4.2 | 4.2 |
| 40 | 2026 | 3560 | 5.6 | 5.0 | 5.0 |
| 30 | 1519 | 2670 | 4.2 | 5.8 | 5.8 |
| 20 | 1013 | 1780 | 2.8 | 6.5 | 6.5 |
| 10 | 507 | 891 | 1.4 | 7.2 | 7.8 |
| 5 | 253 | 445 | 0.7 | 7.6 | 9.2 |
| 1 | 51 | 90 | 0.14 | 8.6 | 13.2 |
| 0.1 | 5.1 | 9 | 0.01 | 10.2 | 27.0 |

The Table and the graph of Fig. 3 show that very dry streams result when the purge ratio is 10% for an area factor of 0.1, or 27% for an area factor of 0.04. It will be noted that these values are well below the maximum available purge ratio of 57%. Thus, a very dry. gas stream can be produced by the gas prepurification process and system of the invention. This is of importance when the ultimate product is very dry, high-purity nitrogen.

The data in the illustrative example are based on a single stage membrane process for the recovery of nitrogen from feed air. When higher purities are required, a two-stage membrane process, or even a three-stage process, is desirably employed. Fig. 4 of the drawings illustrates how a two-stage membrane air separation system can be integrated with the membrane dryer and the carbon trap in the practice of the invention.

In the Fig. 4 embodiment, feed air in line 40 is passed to air compressor 41, with compressed feed air being passed therefrom in line 42 to the feed side of membrane dryer 43 for removal of fast permeating moisture therefrom. The non-permeate, dried feed air is passed from membrane dryer 43 through line 44 to carbon trap 45, from which dried, purified feed air is passed in line 46 to first stage air separation membrane 47, from which air oxygen-rich permeate waste stream is discharged through line 48 from the permeate side of the first stage. The non-permeate nitrogen rich stream is passed from said first stage membrane 47 through line 49 to second stage air separation membrane 50. A dry, very high purity nitrogen is recovered through line 51 from the non-permeate side thereof.

Dry permeate gas from said second stage membrane 50 is removed from the permeate side of said second stage membrane 50 through line 52 for recycle to line 40 for passage, with additional quantities of feed air, to air compressor 41, and to membrane dryer 43 and carbon trap 45. A portion of this dry permeate gas is withdrawn from said line 52 for passage in line 53 for use in the permeate side of membrane dryer 43 as purge gas to facilitate the removal of fast permeating moisture from the feed air passing on the feed, i.e., non-permeate, side of said membrane dryer 43. Said purge gas and the moisture-laden permeate gas removed from membrane dryer 43 are recycled in line 54 for passage, with said permeate gas in line 52, to line 40 for compression in compressor 41, together with additional quantities of feed air to be separated for product nitrogen recovery.

Various changes and modifications can be made in the details of the invention as herein described without departing from the scope of the invention as recited in the appended claims. Thus, when no suitable waste stream is available from the downstream process, a portion of the dry air may be passed, as in said line 17 in the Fig. 1 embodiment, for use as a purge stream for the membrane dryer. It should also be noted that the permeate and purge gas from the membrane dryer may or may not have lower humidity than the ambient air. If the humidity of said gas removed from the permeate side is low enough, and if the composition is otherwise suitable, this gas can be recycled and blended with input feed air at the feed to the compressor.

It will be understood that multi-stage air separation membranes can be employed in the practice of the invention, and dry permeate gas from any one, or a combination of, said stages can be used as purge gas in the membrane dryer. If the permeate gas is suitable after such use as purge, typically if taken from the second or later stages in the membrane system, it may advantageously be recycled for further processing with additional quantities of feed air.

In preferred embodiments of the invention, a carbon adsorbent is employed in a carbon trap. Any suitable commercially available activated carbon material capable of adsorbing the heavier oil hydrocarbon vapors and/or organic or inorganic vapors referred to above can be employed. As described in said Prasad and Haas patent, the activated carbon material can be advantageously employed to selectively adsorb hydrocarbons, such as the heavier hydrocarbon vapors, while allowing lighter hydrocarbon vapors to remain with the feed gas passing through the carbon trap to the membrane system. Calgon BCB Carbon, BPL vapor phase carbon; Carbon 207C of Sutcliffe - Speakman, Inc.; Westvaco Nuchar WV-3; and Norit RB3 of American Norit are representative examples of suitable carbons for use in the practice of the invention. A variety of other adsorbent materials, such as the well known, commercially available zeolite molecular sieve materials, e.g. 5A and 13X molecular sieves, can also be employed.

The carbon bed employed in the preferred carbon trap of the invention, or other adsorbent trap, can be designed as a disposable trap, i.e., it can be sized to provide at least about 6 months of protection of the membrane from degradation, yet have a bed depth that results in less than 5 psi pressure drop in the feed air or other feed stream. Illustrative design features of a typical air separation application of the invention are (1) a feed flow of 66,000 SCFH, (2) a feed gas pressure of 150 psig, (3) an operating temperature of 90°F, and (4) hydrocarbon contaminant levels in the feed air stream of 1.5 ppm (volume) of C₅ or less hydrocarbon vapors, measured as CH₄, and of about 0.5 ppm (volume) or more of greater than C₅, measured as methane, and/or undesired levels of organic vapors. It will be appreciated that the carbon trap, or other adsorbent trap, need not be of the disposable type, but can be of the regenerable type within the practice of the invention.

Membrane separation systems typically employ oil-flooded screw compressors to supply pressurized feed air to the membrane separation surfaces. The resultant oil contamination of feed air is found to degrade membrane performance as discussed above. Such oil-flooded compressors may, of course, be employed for other feed gas pressurization application, and other forms of oil lubricated compressors may be employed for feed air or other feed gas pressurization prior to membrane or other gas separation operations. In all such applications, hydrocarbon oil vapors, as well as other organic or inorganic vapors, can enter the feed gas stream being passed to the membrane or other gas separation system. As even very low concentrations of heavy oil hydrocarbon vapors and/or organic or inorganic vapors, i.e., less than 1 ppmv (C₁), can result in rapid and extensive loss of gas separation membrane permeability, the ability of a disposable carbon or other adsorbent trap to selectively remove such heavy hydrocarbons from the feed gas and/or organic or inorganic vapors, while desirably allowing the lighter hydrocarbons not significantly harmful to the membrane material to pass with the feed gas to the membrane system, enables membrane degradation to be controlled and prevented in a particularly convenient, economically feasible manner. Those skilled in the art will appreciate that, apart from such harmful contamination resulting from use of oil-flooded or other oil lubricated feed gas compressors, other sources of such feed gas contamination exist, and the degradation of membranes thereby can be prevented by the practice of the invention. Thus, the feed air or other gas to be separated may pertain to a ship board application nearby to a diesel engine atmosphere. Similarly, an air or other separation application may be in the vicinity of a hydrocarbon refinery operation. In such cases or other analogous applications, it is possible for the feed gas to become contaminated with heavy hydrocarbons and/or organic or inorganic vapors sufficient to cause commercially undesirable rates of membrane deterioration. In all such cases, the invention provides a convenient and practical approach to maintaining the adsorptive capacity of the carbon trap and to preventing such deterioration so as to avoid the necessity of employing additional membrane surface area to produce a given product flow and purity.

The invention constitutes a highly desirable improvement in prepurifying feed air or other feed gas prior to separation thereof by membrane, pressure swing adsorption (PSA) or cryogenic distillation processes. Apart from air separation applications as noted above, the purification of hydrogen from an off-gas containing methane, ethane and other hydrocarbons is an illustrative example of other gas separation applications that can be beneficial by the practice of the invention when the subject source of degradation is a problem encountered in practical commercial applications. The recovery of hydrogen from ammonia purge gas and carbon dioxide and methane separation are other such examples.

In the embodiments in which air or other gas separation membrane processes and systems are employed, any desired membrane system capable of selectively permeating a more readily permeable component of a feed mixture containing said component and a less readily permeability component can be employed. In this regard, one component referred to herein is a single gas or a combination of gases selectively separated from another gas or gases, i.e. another component, in a feed gas mixture, as where nitrogen and argon are selectively recovered from more readily permeable oxygen. Thus, membranes of the composite type, asymmetric type membranes or any other form of membrane structure can be advantageously protected from undue degradation of the practice of the invention. Composite membranes generally comprise a thin separation layer or coating of a suitable permeable membrane material superimposed on a porous substrate, with the separation layer determining the separation characteristics of the composite membrane structure. Asymmetric membranes, on the other hand, are composed essentially of a single permeable membrane material having a thin dense semipermeable skin that determines the separation characteristics of the membrane, and a less dense, porous, nonselective support region that serves to preclude the collapse of the thin skin region under pressure. Such membrane structures may be prepared in a variety of forms, such as spiral wound, hollow fiber, flat sheet and the like. For use in practical commercial operations, such membrane structures are commonly employed in membrane assemblies that are typically positioned within enclosures to form membrane modules that comprise the principal elements of an overall membrane system. A membrane system generally comprises a number of such modules, arranged for either parallel or series operation, and constructed as hollow fiber bundles, spiral wound cartridges, pleated flat sheet membrane assemblies or other such assemblies common in the membrane industry.

The membrane material employed in any particular gas separation can be any material capable of selectively permeating a more readily permeable component of the feed air or other feed gas mixture. Cellulose derivatives, such as cellulose acetate, cellulose acetate butyrate, and the like; polyamides and polyimides, including aryl polyamides and aryl polyimidies; polysulfones; polyarylates; polystyrenes and the like, are representative examples of such materials.

Those skilled in the art will readily appreciate that the invention can likewise be practiced with respect to the use of a wide variety of suitable air or other gas separation PSA or cryogenic systems and processes wherein the pre-drying of the feed gas stream as herein provided is advantageous to the overall operation.

The invention will thus be seen as an important commercial advance, rendering highly significant air and other gas separation operating more feasible from an overall technical and economic viewpoint. In this manner, the ability of various air and other gas separation operations to satisfy the ever-increasing demands for the more efficient performance throughout the industrialized world is desirably enhanced.

## Claims

1. In a process for the separation of a feed gas mixture in a gas separation system capable of selectively separating one component of the feed gas mixture from another, wherein the feed gas mixture contains moisture and hydrocarbon and/or organic or inorganic vapor contaminants, the improvement comprising:
(a) passing the feed gas mixture containing moisture and contaminants to the non-permeate side of a membrane dryer system adapted for the passage of purge gas on the permeate side thereof and for the passage of the feed gas stream in a countercurrent flow pattern relative to the flow of purge gas on the permeate side thereof, said membrane dryer system being capable of selectively permeating fast permeating water vapor from the feed gas mixture;
(b) passing a dried feed gas mixture from the non-permeate side of the membrane dryer system to a bed of adsorbent material capable of adsorbing hydrocarbons heavier than C₅ (pentane) and/or organic or inorganic vapors from the dried feed gas mixture to form a dried, purified feed gas mixture;
(c) introducing said dried, purified feed gas mixture to said gas separation system for the selective separation of a desired component therefrom;
(d) passing purge gas to the permeate side of the membrane dryer system in countercurrent flow to the flow of said feed gas mixture in order to facilitate carrying away of the fast permeating water vapor from the surface of the membrane and maintaining the driving force for removal of the fast permeating water vapor through the membrane dryer from the feed gas mixture;
(e) recovering a dry product gas comprising one component of the feed gas mixture from the gas mixture from the gas separation system;
(f) separately removing the other component of the feed gas mixture from said gas separation system; and
(g) discharging purge gas and the fast permeating moisture that has permeated the membrane dryer from the permeate side of the membrane dryer system,
whereby the moisture and heavier hydrocarbons and/or organic or inorganic vapors present in the feed gas mixture are advantageously removed, with the operable life of the bed of adsorbent material being desirably extended and the overall performance of the gas separation system being enhanced.

2. The process of Claim 1 in which said purge gas comprises a dry stream from the gas separation system or a portion of the dried feed gas mixture passing to the bed of adsorbent material.

3. The process of Claim 1 in which, in step (c) thereof, said dried, purified feed gas mixture is introduced to a membrane gas separation system.

4. The process of Claim 1 in which said feed gas mixture comprises air.

5. The process of Claim 3 in which a portion of said other component separately removed from the gas separation system is recycled as said purge gas.

6. The process of Claim 5 in which said feed gas mixture comprises air, the dry product gas recovered from the membrane gas separation system comprises dry high purity nitrogen recovered as non-permeate gas therefrom, and said other component separately removed from the gas separation system comprises dry oxygen-enriched permeate gas therefrom.

7. The process of Claim 6 in which said membrane gas separation system comprises a two or more stage membrane system, and recycling a portion of the permeate from at least one of the stages to the permeate side of the membrane dryer system for use as purge gas therein.

8. The process of Claim 7 and including recycling the purge gas and fast permeating water vapor that has permeated the membrane dryer from the permeate side of the membrane dryer system for passage, with additional quantities of feed air, to the membrane dryer.

9. The process of Claim 8 and recycling additional quantities of permeate from one or more of the stages to the membrane dryer.

10. The process of Claim 1 in which said adsorbent material comprises activated carbon.

11. In a system for the separation of a feed gas mixture in a gas separation system capable of selectively separating one component of the feed gas mixture from another, wherein the feed gas mixture contains moisture and hydrocarbon contaminants and/or organic or inorganic vapors, the improvement comprising:
(a) a membrane dryer system adapted for the passage of purge gas on the permeate side thereof and for the passage of the feed gas stream in a countercurrent flow pattern relative to the flow of purge gas on the permeate side thereof, said membrane dryer system being capable of selectively permeating first permeating water vapor from the feed gas mixture;
(b) conduit means for passing the feed gas mixture to the non-permeate side of the membrane dryer system;
(c) a bed of adsorbent material capable of adsorbing hydrocarbons heavier than C₅ (pentane) and/or organic or inorganic vapors from a dry feed gas mixture passed thereto from said membrane dryer system to form a dry, purified feed gas mixture;
(d) conduit means for passing said dry feed gas mixture from said membrane dryer system to said bed of adsorbent material;
(e) a gas separation system for the selective separation of a desired component from said dried, purified feed gas mixture;
(f) conduit means for passing said dried, purified feed gas mixture to said gas separation system;
(g) conduit means for passing purge gas to the permeate side of the membrane dryer system in countercurrent flow to the flow of said feed gas mixture in order to facilitate carrying away of the fast permeating water vapor from the surface of the membrane and maintaining the driving force for removal of the fast permeating water vapor through the membrane. dryer from the feed gas mixture;
(h) conduit means for recovering a dry product gas comprising one component of the feed gas mixture from the gas separation system;
(i) separate conduit means for removing the other component of the feed gas mixture from said gas separation system;
(j) conduit means for discharging purge gas and the fast permeating water vapor that has permeated the membrane from the permeate side thereof,
whereby the moisture and heavier hydrocarbons and/or organic or inorganic vapors present in the feed gas mixture are advantageously removed, with the operable life of the bed of adsorbent material being desirably extended and the overall performance of the gas separation system being enhanced.

12. The system of Claim 11 in which said conduit means (g) comprises conduit means for passing purge gas comprising a dry stream from the gas separation system or a portion of the dried gas mixture passing to the bed of adsorbent material to the permeate side of the membrane dryer.

13. The system of Claim 11 in which the gas separation system comprises a membrane gas separation system.

14. The system of Claim 13 in which said conduit means for passing purge gas to the permeate side of the membrane dryer system comprises conduit means for recycling a portion of the other component separately removed from the gas separation system as said purge gas.

15. The system of Claim 13 in which (a) said gas separation system comprises a membrane gas separation system; (b) said conduit means for recovering dry product gas comprises conduit means for recovering non-permeate gas from said membrane gas separation system; and (c) said separate conduit means for removing the other component of the feed gas mixture from said gas separation system comprises conduit means for removing permeate gas therefrom.

16. The system of Claim 15 in which said membrane gas separation system comprises a two or more stage membrane system, and including conduit recycle means for recycling a portion of the permeate from one or more stages to the permeate side of the membrane dryer system as purge gas.

17. The system of Claim 16 and including conduit recycle means for recycling the purge gas and fast permeating water vapor that has permeated the membrane dryer system from the permeate side of the membrane dryer system for passage, with additional quantities of the feed gas mixture, to the non-permeate side of the membrane dryer.

18. The system of Claim 17 and including conduit recycle means for recycling additional quantities of said second stage permeate to the non-permeate side of the membrane dryer.

19. The system of Claim 11 in which said adsorbent material comprises activated carbon.

20. The system of Claim 11 and including an oil-lubricated compressor system to which the feed gas mixture is passed prior to passage to the membrane dryer system.
